Europäisches Patentamt

European Patent Office

Office européen des brevets

(19)

(11) Veröffentlichungsnummer: **0 087 574**
A1

# (12) EUROPÄISCHE PATENTANMELDUNG

(21) Anmeldenummer: **83100547.5**

(22) Anmeldetag: **22.01.83**

(51) Int. Cl.³: **G 02 B 21/06**

(30) Priorität: **11.02.82 DE 3204686**

(43) Veröffentlichungstag der Anmeldung:
**07.09.83 Patentblatt 83/36**

(84) Benannte Vertragsstaaten:
**AT CH DE FR GB LI**

(71) Anmelder: **Firma Carl Zeiss**

**D-7920 Heidenheim (Brenz)(DE)**

(72) Erfinder: **Müller, Gerhard, Prof. Dr.-Ing.**
**Philipp-Funk Strasse 112**
**D-7080 Aalen(DE)**

(72) Erfinder: **Schwarz, Jürgen, Dr. Dipl.-Ing.**
**Kopernikusstrasse 48**
**D-7082 Oberkochen(DE)**

(54) **Optisches System zur Durchlichtmikroskopie bei Auflichtbeleuchtung.**

(57) Unter der durch ein Auflichtmikroskop beobachteten Durchlichtprobe ist eine Rückspiegeleinrichtung in Form eines Autokollimationssystems aus zwei hochaperturigen Objektiven und einem ebenen Spiegel angeordnet. Die Objektive bilden die Probe und den Spiegel aufeinander ab, so daß auf der Probe ihr eigenes, deckungsgleiches Zwischenbild entsteht.

Infolge zweifacher Durchstrahlung der Probe ergibt sich eine Kontrastverbesserung und Erhöhung der Extinktion bei photometrischen Messungen.

Fig.1

EP 0 087 574 A1

0087574

## Optisches System zur Durchlichtmikroskopie bei Auflichtbeleuchtung

In der Mikroskopie besteht häufig der Wunsch vorhandene Auflichtmikroskope ohne größere Umbauten auch zur Beobachtung von Durchlichtobjekten verwenden zu können. Besonders ausgeprägt ist der Wunsch in der Mikrophotometrie, wo der Übergang von Auflicht- auf Durchlichtphotometrie mit größeren Umbauten und Justierarbeiten verbunden ist. So ist in der Regel der im Beleuchtungsstrahlengang eingebaute Monochromator umzusetzen oder ein zweiter Monochromator zu verwenden.

Es sind bereits optische Systeme für die Mikroskopie an lichtdurchlässigen Objekten bekanntgeworden, die mit einer Rückspiegeleinrichtung für das von einer Auflichtbeleuchtungseinrichtung ausgehende und vom Objekt transmittierte Licht versehen sind, welches nochmals auf die Rückseite des Objekts reflektiert wird. Die Erfindung betrifft ein solches, beispielsweise in der DE-PS 10 83 065 beschriebenes System. Zur Rückspiegelung des vom Objekt transmittierten Lichts besitzt die bekannte Einrichtung einen unter dem Objekt angeordneten Vielfach-Tripelspiegel, der das polarisierte Licht der Auflichtbeleuchtungseinrichtung depolarisiert. Im Zusammenwirken mit einem gekreuzten Analysator im Beobachtungsstrahlengang, der nur den vom Tripelspiegel ausgehenden, depolarisierten Anteil des Lichts passieren läßt, ergibt sich ein Durchlichtbild des im Auflicht beleuchteten Objektes.

Die bekannte Einrichtung liefert jedoch ein relativ lichtschwaches und kontrastarmes Bild und ist für photometrische Messungen nicht geeignet.

Aus der DE-OS 25 46 079 ist ein Spiegelkondensor für Mikroskope bekannt, der aus zwei sphärischen bzw. asphärischen Ringspiegeln besteht und die vom Objekt transmittierten Strahlen einer Auflichthellfeldbeleuchtung als Durchlichtdunkelfeldbeleuchtung auf das Objekt zurückreflektiert. Eine solche Einrichtung ist zwar für die Auflichtfluoreszenzmikroskopie nicht jedoch für die Durchlichtphotometrie geeignet.

Es ist die Aufgabe der vorliegenden Erfindung ein optisches System der eingangs genannten Art so auszubilden, daß es insbesondere auch für photometrische Messungen im Durchlicht geeignet ist.

Diese Aufgabe wird durch eine Ausbildung gemäß dem kennzeichnenden Teil des Hauptanspruches dadurch gelöst, daß die Rückspiegeleinrichtung eine Optik enthält, die das Objekt seiten- und höhenrichtig auf sich selbst abbildet.

Der erfindungsgemäße Aufbau der Rückspiegeleinrichtung stellt sicher, daß Lichtstrahlen, die durch das Objekt hindurchtreten, in beiden Richtungen jeweils gleiche Objektpunkte passieren. Dadurch wird eine Kontrastverstärkung und bei photometrischen Messungen eine Verdoppelung der Extinktionswerte im Vergleich zu herkömmlicher, einfacher Durchlichtbeleuchtung erzielt. Dies ist insbesondere bei der Photometrie schwach absorbierender Objekte von Vorteil.

Ein sehr einfacher Aufbau ergibt sich, wenn zur Rückspiegelung ein unter bzw. bei inversen Mikroskopen über der Probe angeordnetes Autokollimationssystem verwendet wird mit einer Optik, welche die Rückseite des Objektes auf einen ebenen Spiegel abbildet und das entstehende Bild auf die Objektunterseite zurückabbildet. Dieses Autokollimationssystem kann zur Vermeidung von Aperturverlust beispielsweise aus zwei Objektiven mit unendlicher Ausgangsschnittweite bestehen, in deren Brennpunkt jeweils die Objektebene bzw. die Oberfläche des ebenen Spiegels liegen. Letzterer wird zweckmäßig direkt auf das ihm zugeordnete Objektiv aufgekittet und bildet mit diesem eine Baueinheit.

Für die Mikrophotographie ist es zweckmäßig den ebenen Spiegel der Autokollimationsoptik als teildurchlässigen Spiegel auszubilden, über den beliebige Zusatzinformation in das mikroskopische Bild eingeblendet werden kann.

Weiterhin ist es vorteilhaft, wenn der ebene Spiegel gegen die optische Achse des Systems neigbar befestigt ist. Bei einer Dezentrierung des Autokollimationsstrahlenganges um kleine Winkel wird nämlich die Pupille für das rückgespiegelte Bild einseitig beschnitten, was eine einseitige Verschlechterung von Transmissionssprüngen bewirkt, die z.B. an den Grenzen Objekt/Umgebung vorhanden sind. Auf diese Weise entsteht ein Relieffeffekt wie er auch bei einseitig schiefer Beleuchtungs des Objekts auftritt.

**0087574**

Weitere vorteilhafte Ausbildungen sind in den Unteransprüchen beschrieben und werden nachstehend anhand der Figuren der beigefügten Zeichnungen näher erläutert:

Fig. 1 zeigt schematisch den Aufbau eines Mikroskopphotometers mit der erfindungsgemäßen Rückspiegeleinrichtung;

Fig. 2 zeigt schematisch den Aufbau eines Photomikroskopes mit der erfindungsgemäßen Rückspiegeleinrichtung;

Fig. 3 zeigt eine detailliertere Skizze eines Teils der Rückspiegeleinrichtung aus Fig. 2.

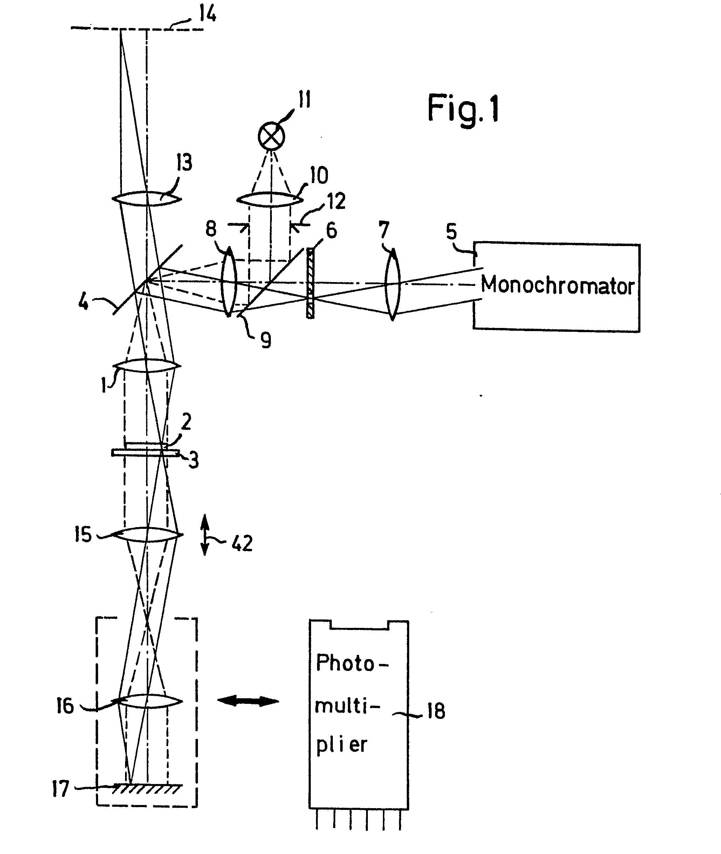

Das in Figur 1 dargestellte Mikroskopphotometer besitzt ein Objektiv 1, durch das ein auf einem Objektträger 3 aufgebrachtes und mit einem Deckglas 2 geschütztes Objekt über den teildurchlässigen Spiegel 4 mit Licht aus einem Monochromator 5 zu Meßzwecken beaufschlagt wird. Mit 5 ist eine Meßblende bezeichnet, die von der Linse 7 ausgeleuchtet und von der Linse 8 und das Objektiv 1 in die Objektebene als beugungs-begrenzter Spot abgebildet wird.

Über einen zweiten Teilerspiegel 9 ist das von der Lampe 11 ausgehende und von einer Optik 10 gesammelte Licht einer Hilfsbeleuchtungseinrichtung eingespiegelt, die zur Beleuchtung des über die Leuchtfeldblende 12 begrenzten Umfeldes des Objekts dient. Die Hilfsbeleuchtungseinrichtung wird bei der eigentlichen photometrischen Messung abgeschaltet.

Im Beobachtungsstrahlengang dient eine Tubuslinse 13 zur Erzeugung eines Zwischenbildes 14 der Probenoberfläche. Nicht dargestellt ist darauffolgend die Fortsetzung des Strahlenganges, der über weitere Teiler oder Klappspiegel das von der Objektebene ausgehende Licht zu einem Binokulartubus und einem Photomultiplier leitet. Die Komponenten 1-14 entsprechen einer photometrischen Anordnung für Auflicht in herkömmlicher Bauweise.

Zusätzlich befindet sich unterhalb der Probe ein Autokollimationssystem bestehend aus den zwei Objektiven 15 und 16 und einem ebenen Spiegel 17, auf dessen Oberfläche die Objektebene abgebildet wird. Somit wird das Objekt zweimal durchstrahlt, wobei in der Objektebene ein mit dem Objekt deckungsgleiches Zwischenbild entsteht. Damit ist eine Erhöhung der Extinktionswerte verbunden, die sich insbesondere bei schwach absorbierenden Proben vorteilhaft auf die Messung auswirkt.

Das Objektiv 16 und der Spiegel 17 sind zu einer Baueinheit zusammengefaßt, die aus dem Strahlengang ausgeschwenkt und gegen einen photoelektrischen Empfänger (Photomultiplier 18) ausgetauscht werden kann. Das ist bei der Photometrie sehr stark absorbierender Objekte von Vorteil, wenn das zweifache Durchstrahlen der Probe in Verbindung mit der Intensitätsschwächung durch den Teilerspiegel 4 zu einem Absinken des Signalpegels unter die Nachweisgrenze führen würde. Der letztgenannte Aufbau entspricht einer als sogenanntes "inverses Photometer" bekannten Anordnung. Sie hat gegenüber der herkömmlichen Durchlichtphotometrie, bei der das Objekt über das gesamte Leuchtfeld kleiner Apertur ausgeleuchtet wird, den Vorteil höherer Empfindlichkeit, da keine Streulichtanteile aus nicht zur Messung herangezogenen Objektpunkten auftreten. Dieser Vorteil bleibt auch nach Einschwenken der Rückspiegeleinrichtung in den Strahlengang erhalten.

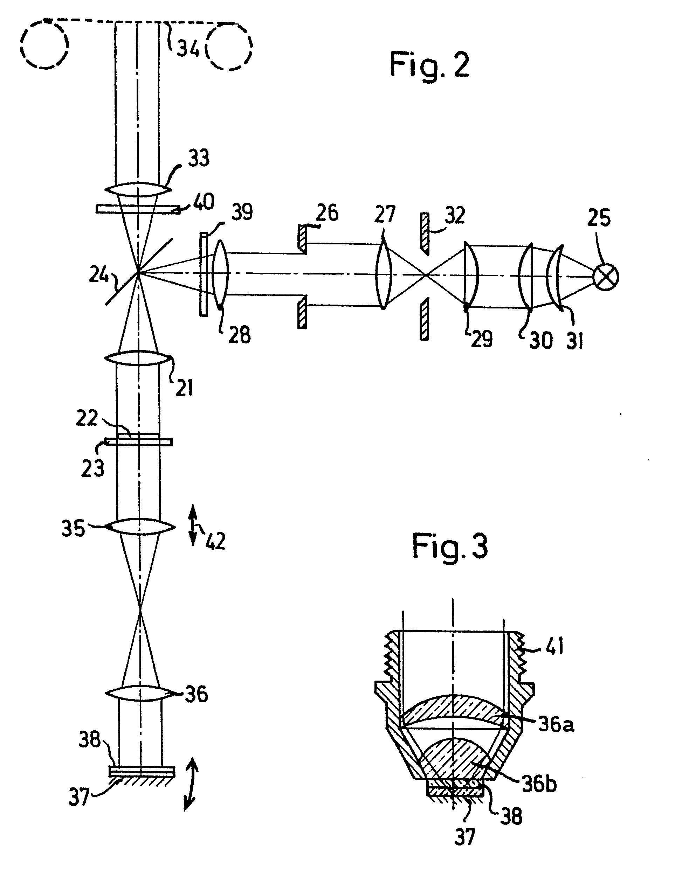

Die in Figur 2 skizzierte mikrophotographische Einrichtung entspricht in ihren über dem Objektträger 23 angeordneten Komponenten einem herkömmlichen Auflichtmikroskop bestehend aus Lichtquelle 25, Kollektor 30/31, einer Optik 29 zur Zwischenabbildung der Lichtquelle in die Aperturblendenebene 32, einer Optik 27/28 zur Ausleuchtung bzw. Abbildung der Leuchtfeldblende 26 in die Objektebene, dem Teilerspiegel 24, dem Objektiv 21 und der Tubuslinse 33. Die Zwischenbildebene 34 wird über nicht mehr dargestellte weiterer Optiken und Strahlteiler in einen Binokulartubus und auf die Filmebene einer Kamera abgebildet, die vereinfachend direkt in die Zwischenbildebene 34 hineingezeichnet ist.

Zusätzlich sind zur Unterdrückung von Reflexen ein Polarisator 39 im Beleuchtungsstrahlengang und ein dazu gekreuzter Analysator 40 im Beobachtungsstrahlengang angeordnet.

Unterhalb des Objektträgers 23 befindet sich die bereits aus Figur 1

**0087574**

bekannte Rückspiegeleinrichtung bestehend aus den beiden Objektiven 35 und 36 mit unendlicher Ausgangsschnittweite und dem ebenen Spiegel 37, der durch die verspiegelte Rückseite eine sogenannnten $\lambda$/4-Platte 38 gebildet ist. Beim zweimaligen Durchgang durch diese $\lambda$/4-Platte deren Achse um 45° gegen die Polarisationsrichtung gedreht ist, wird letztere in bekannter Weise um 90° gedreht und das durch das Objekt hindurchgetretene kann demzufolge den Analysator 40 passieren, während störende Reflexe von den Optiken 21-23, 35 und 36 ausgelöscht werden.

In seiner Stellung zwischem dem Objektiv 36 und dem Spiegel 37 hat die $\lambda$/4 Platte 38 außerdem einen rectifizierenden Effekt. Wird sie daher mit ihrer Achse parallel zur Polarisationsrichtung angeordnet, so läßt sich Polarisationsmikroskopie betreiben, wobei azimutabhängige Drehungen der Polarisationsrichtung in den Optiken 21, 35 und 36 teilweise kompensiert werden.

Die $\lambda$/4-Platte 38, der Spiegel 37 und das Objektiv bilden wie Figur 3 zeigt, eine Baueinheit 41. Dabei ist die Platte 38 direkt auf die Frontlinse des kurzbrennweitigen Immersionsobjektiv aufgeklebt. Damit ist sichergestellt, daß sich die Spiegelschicht 37 stets im Brennpunkt des Objektivs befindet; die Justierung der Rückspiegeleinrichtung im Hinblick auf eine scharfe Abbildung des Objekts auf sich selbst erfolgt allein durch Verschieben des Objektivs 35 in der durch den Pfeil 42 angegebenen Richtung.

Zusätzlich läßt sich die Baueinheit 41 um geringe Winkel gegen die optische Achse neigen, wodurch eine einseitige Verschlechterung von Transmissionsübergängen im rückgespiegelten Bild erfolgt. Für den Beobachter entsteht bei Überlagerung der beiden Bilder ein Reliefeffekt, wie er z.B. auch bei einseitig schiefer Beleuchtung auftritt.

Auch die übrigen bekannten Kontrastierungsverfahren wie Phasenkontrast und Differentialinterferenzkontrast lassen sich ohne Schwierigkeiten im Zusammenhang mit der Rückspiegelungseinrichtung durchführen. Die entsprechenden Blenden bzw. Wollastonprismen können dabei wie für reine Auflichtbeobachtung angeordnet werden. Eine Kombination eines Phasenkontrastbildes bei einem reinen Durchlichtbild erhält man, wenn die Phasen-

0087574

ringe in der hinteren Brennebene des Objektivs 35 in der Rückspiegeleinrichtung angeordnet werden.

0087574

Patentansprüche:

1. Optisches System für die Mikroskopie an lichtdurchlässigen Objekten mit einer Rückspiegeleinrichtung, die das von einer Auflichtbeleuchtungseinrichtung ausgehende und vom Objekt transmittierte Licht nochmals auf die Rückseite des Objekts reflektiert, dadurch gekennzeichnet, daß die Rückspiegeleinrichtung eine Optik (15-17; 35-37) enthält, die das Objekt seiten- und höhenrichtig auf sich selbst abbildet.

2. Optisches System nach Anspruch 1, dadurch gekennzeichnet, daß die Optik mindestens ein zwischen dem Objekt (3) und einem ebenen Spiegel (17) angeordnetes Objektiv umfaßt, welches das Objekt und den Spiegel aufeinander abbildet.

3. Optisches System nach Anspruch 2, dadurch gekennzeichnet, daß die Optik aus zwei Objektiven (15,16; 35,36) besteht, die eine Ausgangsschnittweite von Unendlich besitzen.

4. Optisches System nach Anspruch 3, dadurch gekennzeichnet, daß der ebene Spiegel (37) auf die Frontlinse (36b) des zweiten Objektivs (36) aufgesetzt ist.

5. Optisches System nach Anspruch 2-4, dadurch gekennzeichnet, daß das zweite Objektiv (16) mit dem Spiegel (17) gemeinsam aus dem Strahlengang ausschwenkbar ist.

6. Optisches System nach Anspruch 2-5, dadurch gekennzeichnet, daß der ebene Spiegel als Strahlteiler ausgebildet ist.

7. Optisches System nach Anspruch 2-6, dadurch gekennzeichnet, daß zwischen dem ebenen Spiegel (37) und dem zweiten Objektiv (36) eine $\lambda$/4-Platte (38) angeordnet ist.

8. Optisches System nach Anspruch 2-7, dadurch gekennzeichnet, daß der ebene Spiegel (37) um kleine Winkel gegen die optische Achse neigbar ist.

9. Optisches System nach Anspruch 1-8, dadurch gekennzeichnet, daß die Rückspiegelungseinrichtung Blenden für eine Phasenkontrastierung enthält.

10. Optisches System nach Anspruch 1-9, gekennzeichnet durch seine Verwendung zur Durchlichtmikrophotometrie.

Fig.1

Monochromator

Photomultiplier

Fig. 2

Fig. 3

**Europäisches Patentamt**

# EUROPÄISCHER RECHERCHENBERICHT

**0087574**
Nummer der Anmeldung

EP 83 10 0547

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-2 601 175  (F.H. SMITH) <br> * Ansprüche; Figuren 4,5,7,9,10 * | 1 | G 02 B 21/06 |
| Y | DE-B-1 083 065  (C. ZEISS) <br> * Spalte 1; Figur * | 1 | |
| A | GB-A- 764 934  (C. ZEISS) <br> * Ansprüche 1,2 * | 1 | |
| | ----- | | |

**RECHERCHIERTE SACHGEBIETE (Int. Cl. ³)**

G 02 B 21/06
G 02 B 21/08

Der vorliegende Recherchenbericht wurde für alle Patentansprüche erstellt.

| Recherchenort <br> DEN HAAG | Abschlußdatum der Recherche <br> 24-05-1983 | Prüfer <br> PFAHLER R. |
|---|---|---|